# EUROPÄISCHE PATENTSCHRIFT

(11) **EP 3 474 721 B1**
(45) Veröffentlichungstag und Bekanntmachung des Hinweises auf die Patenterteilung: **03.06.2020**
(21) Anmeldenummer: 17730114.0
(22) Anmeldetag: 08.06.2017
(51) Int. Cl.: D06F 34/32, D06F 34/30, A47L 15/42, A47J 31/44, G05B 19/04, G09F 23/00, F24C 7/08

(54) **HAUSHALTSGERÄT MIT VERBESSERTEM DREHWÄHLER UND VERFAHREN ZUM BETRIEB DES HAUSHALTSGERÄTES**
DOMESTIC APPLIANCE WITH IMPROVED ROTARY SELECTOR SWITCH AND METHOD FOR OPERATING THE DOMESTIC APPLIANCE
APPAREIL MÉNAGER MUNI D'UN SÉLECTEUR ROTATIF AMÉLIORÉ ET PROCÉDÉ PERMETTANT DE FAIRE FONCTIONNER UN APPAREIL MÉNAGER

(30) Priorität: 24.06.2016 DE 102016211327
(43) Veröffentlichungstag der Anmeldung: 01.05.2019
(73) Patentinhaber: BSH Hausgeräte GmbH, 81739 München (DE)
(72) Erfinder: BISCHOFF, Martin, 14612 Falkensee (DE); GRAEBSCH, Martin, 10587 Berlin (DE); LUBERT, Thomas, 14052 Berlin (DE); SCHLASS, Alexander, 14624 Dallgow-Döberitz (DE)
(86) Internationale Anmeldenummer: PCT/EP2017/063995
(87) Internationale Veröffentlichungsnummer: WO 2017/220337

(56) Entgegenhaltungen:
- EP-A2- 1 923 999
- WO-A1-2013/087537
- DE-A1-102005 049 802
- DE-A1-102009 002 623
- US-A- 5 450 075
- US-A1- 2009 009 491
- US-A1- 2015 198 645

## Beschreibung

Die Erfindung betrifft ein Haushaltsgerät mit einem verbesserten Drehwähler und ein Verfahren zum Betrieb des Haushaltsgerätes. Die Erfindung betrifft insbesondere ein Haushaltsgerät mit einem Gehäuse, einer Bedienblende, die auf einer Außenoberfläche einen um eine Drehachse drehbaren Drehwähler mit einer Deckeloberfläche, einer Manteloberfläche und einer Bodenoberfläche aufweist, und einer Steuereinheit. Die Erfindung betrifft außerdem ein Verfahren zum Betrieb dieses Haushaltsgerätes.

Die Offenlegungsschrift DE 10 2009 002623 A1 beschreibt einen Programmwähler für ein Hausgerät.

Die Offenlegungsschrift EP 1 923 999 A2 beschreibt eine Bedienvorrichtung für ein Elektrogerät.

Die Offenlegungsschrift DE 10 2005 049802 A1 beschreibt eine Haushaltsgerätebedienvorrichtung.

Die Offenlegungsschrift US 2015/198645 A1 beschreibt einen kapazitiven Sensor.

Die Patentschrift US 5 450 075 A beschreibt einen drehbaren Steuerknopf für ein Musikmischpult.

Haushaltsgeräte weisen im Allgemeinen eine Frontblende auf, welche die Möglichkeit der Einstellung von im Haushaltsgerät durchzuführenden Programmen bietet, sowie eine Darstellung von Informationen über die Durchführung eines ausgewählten Programms. Haushaltsgeräte sind hierbei beispielsweise Wäschebehandlungsgeräte wie Waschmaschinen, Trockner und Waschtrockner, Geschirrspülmaschinen, Mikrowellengeräte, Backöfen und -herde, Kaffeemaschinen sowie Mixgeräte. Die Darstellung von Informationen und ausgewählten Programmen erfolgt dabei oft über ein optisches Display, bei dem einzelnen Displayteilbereichen zugeordnete Programme durch Beleuchtung der Displayteilbereiche hervorgehoben werden, so dass insbesondere deren Durchführung angezeigt werden kann.

Bei vielen Haushaltsgeräten ist ein Drehwähler, auch Drehschalter genannt, vorhanden, der beispielsweise in der Mitte einer Bedienblende positioniert ist. Ein auf dem Drehwähler angebrachter Punkt kann dabei eine Programmwahl anzeigen oder quittieren. Zusätzlich oder alternativ können ausgewählte Programme durch eine Beleuchtung der Programmwahlbezeichnungen angezeigt werden.

Die Veröffentlichung US 7,878,669 B2 beschreibt ein Dekor für einen Drehknopf einer Waschmaschine, welcher an einer Bedienblende zur Auswahl von Waschprogrammen angeordnet ist. Der Hauptkörper eines Lampenfensters umfasst eine Vielzahl von darin eingeformten Lampenfenstern, durch welche Licht von der Rückseite bis zur Vorderseite transparenten und elektrisch leitfähigen Lack und/oder Kleber ausgebildet ist, welcher insbesondere Nanoröhrchen aus Kohlenstoff beinhaltet.

Die Veröffentlichung DE 10 2011 077 902 A1 beschreibt eine kapazitive Bedien- und Anzeigeeinrichtung für ein Haushaltsgerät, mit einem Anzeigefenster mit einer berührungsempfindlichen Bedienfläche, wobei am Anzeigefenster ein Anzeigesymbol angebracht ist, mit mindestens einem Leuchtelement zur Abgabe von Licht zum Hinterleuchten des Anzeigesymbols, und mit einer kapazitiven Sensorelektrode als Teil eines Berührungskondensators, welche in einem Abstand zur Bedienfläche angeordnet sind, so dass beim Berühren der Bedienfläche eine Kapazität des Berührungskondensators veränderbar ist, wobei die Sensorelektrode an einer Leiterplatte angeordnet ist und zwischen der Bedienfläche und der Sensorelektrode ein Element angeordnet ist, welches aus einem elastischen, elektrisch isolierenden Material ausgebildet ist.

Die Veröffentlichung DE 10 2012 223 779 A1 beschreibt ein Haushaltsgerät mit einer Steuereinrichtung, einer mindestens teilweise lichtdurchlässigen Blende sowie mit einem mindestens teilweise lichtdurchlässigen Bedienpanel mit mindestens einem kapazitiven Sensor zur Auswahl einer Programmfunktion des Haushaltsgerätes durch einen Benutzer des Gerätes, wobei das Bedienpanel ein aus mehreren Schichten bestehendes Kunststoffbauteil aufweist, umfassend (a) eine Anzeigedisplayfolie; (b) eine berührungsempfindliche Folie, welche den mindestens einen kapazitiven Sensor sowie elektrische Leiterbahnen aufweist; und (c) eine strukturierte Lichtleiterschicht; wobei das Kunststoffbauteil erhältlich ist durch Verbinden einer selbstklebenden Anzeigedisplayfolie mit der berührungsempfindlichen Folie und ein anschließendes Hinterspritzen der strukturierten Lichtleiterschicht.

Die Veröffentlichung WO 2012/175523 A1 beschreibt eine Bedien- und Anzeigeeinrichtung für ein Haushaltsgerät, wobei kapazitive Sensorelektroden in Überlappung mit der berührungsempfindlichen Betätigungsfläche angeordnet sind und zumindest einem Teil von Funktionszeichen, denen ein Wert eines Parameters eines Betriebsprozesses des Haushaltsgerätes zugeordnet sind, jeweils eine separate kapazitive Sensorelektrode zugeordnet ist, welche in Überlappung mit dem ihr zugeordneten Funktionszeichen angeordnet ist, so dass durch Berührung der Betätigungsfläche in einem Überlappungsbereich mit einer der Sensorelektroden eine Kapazität eines diese Sensorelektrode aufweisenden Berührungskondensators veränderbar ist.

Vor diesem Hintergrund war es Aufgabe der vorliegenden Erfindung, ein Haushaltsgerät mit einem verbesserten Drehwähler bereitzustellen. Dabei sollte es insbesondere ermöglicht werden, die Anordnung von Bedien- und Anzeigeelementen im Drehwähler flexibler und deren Anzahl im Drehwähler erhöhen zu können, sowie die Darstellung von Informationen auf einer Bedienblende des Haushaltsgerätes benutzerfreundlicher zu gestalten. Aufgabe der Erfindung war es außerdem, ein Verfahren zum Betrieb eines solchen Haushaltsgeräts bereitzustellen.

Die Lösung dieser Aufgabe wird nach dieser Erfindung erreicht durch ein Haushaltsgerät sowie ein zum Betrieb dieses Haushaltsgerätes geeignetes Verfahren mit den Merkmalen der entsprechenden unabhängigen Patentansprüche. Bevorzugte Ausführungsformen des erfindungsgemäßen Haushaltsgeräts sowie des erfindungsgemäßen Verfahrens sind in den jeweiligen abhängigen Patentansprüchen aufgeführt. Bevorzugten Ausführungsformen des erfindungsgemäßen Haushaltsgeräts entsprechen bevorzugte Ausführungsformen des erfindungsgemäßen Verfahrens und umgekehrt, auch wenn dies hierin nicht explizit festgestellt ist.

Gegenstand der Erfindung ist somit ein Haushaltsgerät mit einem Gehäuse, einer Bedienblende, die auf einer Außenoberfläche einen um eine Drehachse drehbaren Drehwähler mit einer Deckeloberfläche, einer Manteloberfläche und einer Bodenoberfläche aufweist, und einer Steuereinheit, wobei der Drehwähler auf zumindest einem Teil seiner Manteloberfläche eine erste berührungsempfindliche Fläche aufweist und auf einem Teil der Bodenoberfläche eine zweite berührungsempfindliche Fläche aufweist, wobei die zweite berührungsempfindliche Fläche einer inneren berührungsempfindlichen Fläche auf einer Innenoberfläche der Bedienblende derart gegenüberliegt, dass die zweite berührungsempfindliche Fläche und die innere berührungsempfindliche Fläche miteinander in Wechselwirkung treten können, wobei für eine Signalerzeugung an den berührungsempfindlichen Flächen die berührungsempfindlichen Flächen bei einer Berührung durch den Benutzer und/oder bei einer Drehung des Drehwählers eine Änderung einer elektrischen Kapazität zeigen, wobei die Signale von der zweiten berührungsempfindlichen Fläche an die innere berührungsempfindliche Fläche weitergeleitet werden, wobei eine mit der inneren berührungsempfindlichen Fläche verbundene Auswerteelektronik zur Auswertung der Änderung der elektrischen Kapazität in Hinblick auf eine absolute und/oder relative Änderung einer Position des Drehwählers vorgesehen ist, wobei eine an der ersten berührungsempfindlichen Fläche auftretende Änderung einer elektrischen Kapazität an die zweite berührungsempfindliche Fläche kommuniziert werden kann, wobei die Deckeloberfläche als Projektionsfläche ausgebildet ist und das Haushaltsgerät innerhalb des Gehäuses eine Projektionsvorrichtung enthält, die eingerichtet ist, um auf der Projektionsfläche Sichtinformation darzustellen.

Bei der vorliegenden Erfindung kann somit die Manteloberfläche vollständig berührungsempfindlich ausgestaltet sein, während die Bodenoberfläche zumindest teilweise nicht berührungsempfindlich ausgestaltet ist, indem neben einem oder mehreren im Allgemeinen elektrisch leitenden berührungsempfindlichen Oberflächenbereichen auch mindestens ein elektrisch isolierender Oberflächenbereich vorhanden ist.

Vorzugsweise beinhaltet der Drehwähler ein Deckelteil mit der Deckeloberfläche und einen Hohlzylinder mit der Manteloberfläche.

Dabei ist bei einer bevorzugten Ausführungsform des erfindungsgemäßen Haushaltsgerätes der Drehwähler einstückig derart ausgestaltet, dass Deckelteil und Hohlzylinder ein einziges Bauteil bilden. In einer alternativen bevorzugten Ausführungsform sind Deckelteil und Hohlzylinder zwei getrennte Bauteile. In diesem Fall können Deckelteil und Hohlzylinder auf beliebige Weise miteinander verbunden sein, beispielsweise über eine Klemm-, Schraub- oder Klebeverbindung.

Der Drehwähler kann so ausgestaltet sein, dass lediglich durch eine Drehbewegung ein Betriebsprogramm und/oder Betriebsparameter des Haushaltsgerätes ausgewählt werden können. Es ist allerdings auch möglich, dass der Drehwähler so ausgestaltet ist, dass durch Drücken und/oder Berühren zumindest eines Teiles seiner Oberfläche, insbesondere einer Deckeloberfläche, eine Steuerung des Haushaltsgerätes vorgenommen werden kann.

Hierbei ist es erfindungsgemäß vorgesehen, dass der Drehwähler des Haushaltsgerätes einen berührungsempfindlichen Oberflächenbereich aufweist, der zur Steuerung des Haushaltsgerätes geeignet ist. Der berührungsempfindliche Oberflächenbereich, vorzugweise die Deckeloberfläche, ist bei dieser Ausführungsform durch die Anordnung von Elektroden vorzugsweise so ausgestaltet, dass sich bei Annäherung oder Berührung eines Gegenstandes und/oder eines Körperteiles, z.B. eines Fingers, eine elektrische Kapazität ändert. Diese Kapazitätsänderung stellt dann ein Signal dar, welches gewünschte Schritte im Haushaltsgerät initiieren kann bzw. Einstellungen bewirken kann.

Jedenfalls ist es erfindungsgemäß bevorzugt, dass die Deckeloberfläche zumindest teilweise berührungsempfindlich ausgestaltet ist, vorzugsweise in einem zentralen Bereich.

Bei einer bevorzugten Ausführungsform ist die zweite berührungsempfindliche Fläche als eine sich von der Manteloberfläche in Richtung des Zentrums der Bodenoberfläche erstreckende Abschnittsfläche ausgebildet, welche in elektrisch leitendem Kontakt mit der ersten berührungsempfindlichen Fläche steht. Das Zentrum der Bodenfläche kann im Falle eines Hohlzylinders auch ein gedachtes Zentrum sein, so dass sich die Abschnittsfläche insbesondere auch nicht bis zum Zentrum erstreckt.

Bei dieser Ausführungsform weist vorzugsweise ein zylindrischer Umfangsteil als Teil eines Hohlzylinders an einer dem Deckelteil abgewandten Stirnfläche eine ringförmige Bodenoberfläche auf, welche in Form einer Abschnittsfläche eine Übertragungsfläche für Positionsinformation beinhaltet.

Bei einer hierzu alternativen oder ergänzenden Ausführungsform des Haushaltsgerätes enthält die zweite berührungsempfindliche Fläche eine Anzahl von auf der Bodenoberfläche durch Isolationsflächen voneinander isolierten Unterflächen oder besteht aus diesen. Hierbei ist es wiederum bevorzugt, dass die Isolationsflächen unsymmetrisch zu einer sich vom Zentrum der Bodenfläche zur Manteloberfläche erstreckenden Achse ausgebildet sind. Insbesondere sind die Isolationsflächen vorteilhaft als Spitzen ausgebildet. Bei einer solchen unsymmetrischen Ausgestaltung der Isolationsflächen ist es insbesondere möglich, die Richtung der Drehung des Drehwählers festzustellen. Hierzu ist im Allgemeinen in der Steuereinheit ein entsprechendes Auswertungsprogramm für die Änderung eines Berührungssignals, z.B. eine Änderung einer elektrischen Kapazität, hinterlegt. Abhängig von der Form und Größe einer zwischen zwei Unterflächen befindlichen Isolationsfläche wird nämlich eine registrierte Kapazitätsänderung unterschiedlich sein.

Beim erfindungsgemäßen Haushaltsgerät besteht die erste berührungsempfindliche Fläche vorzugsweise aus einer leitfähigen Beschichtung eines nichtleitenden Zylindermantels. Dabei besteht der nichtleitende Zylindermantel im Allgemeinen im Wesentlichen aus Kunststoff. Die Beschichtung kann beispielsweise eine elektrisch leitfähig ausgestattete Kunststofffolie oder eine Metallfolie sein, die auf dem nichtleitenden Zylindermantel aufgebracht worden ist. Die Beschichtung kann beispielsweise durch eine galvanische Beschichtung, eine Folienhinterspritzung in einem Spritzgießwerkzeug, durch Aufstecken oder Hinterspritzen von Echtmetallteilen oder auch durch Aufkleben oder Einlegen von berührungsempfindlichen, d.h. touchleitenden, Materialien geschehen. Im Übrigen kann auch eine gewünschte Dekoration der Deckeloberfläche oder Manteloberfläche vorgenommen werden.

Jedenfalls ermöglicht die leitfähige Beschichtung eine Weiterleitung von Berührungen an der Manteloberfläche und ggf. auch der Deckeloberfläche, falls diese ebenfalls elektrisch leitfähig beschichtet ist, an die Rückseite, d.h. die Bodenoberfläche des Drehwählers, und damit an eine auf der Innenoberfläche der Bedienblende befindliche innere berührungsempfindliche Fläche. Dabei ermöglicht die Art der Beschichtung der Bodenoberfläche, wie oben beschrieben beispielsweise in Form einer Abschnittsfläche oder in Form von leitfähigen Unterflächen, die von insbesondere unsymmetrisch ausgestalteten Isolationsflächen voneinander getrennt sind, letztlich die Bestimmung einer absoluten oder auch relativen Position des Drehwählers an der Bedienblende.

Auf der Innenseite der Bedienblende ist erfindungsgemäß eine berührungsempfindliche innere Fläche angeordnet. Vorzugsweise wird die innere berührungsempfindliche Fläche durch eine berührungsempfindliche Folie gebildet, welche mindestens eine berührungsempfindliche Elektrode enthält. Die berührungsempfindliche Folie ist im Allgemeinen mit einer Auswerteelektronik für z.B. an berührungsempfindlichen Elektroden erzeugte Signale verbunden. Bei der vorgenannten Anordnung der berührungsempfindlichen Folie wird es im Allgemeinen nicht direkt zu einer Berührung, z.B. durch einen länglichen Gegenstand kommen. Vielmehr werden Signale vom Drehwähler, hierin insbesondere von zweiten berührungsempfindlichen Flächen auf der Bodenoberfläche, an die innere berührungsempfindliche Fläche, d.h. hier insbesondere elektrisch leitfähige Fläche, weitergeleitet.

Die innere berührungsempfindliche Fläche kann durch eine einzige zusammenhängende berührungsempfindliche Fläche gebildet sein, oder aber durch mehrere, dann insbesondere voneinander elektrisch isolierte leitfähige Unterflächen gebildet sein. Insbesondere kann die berührungsempfindliche Fläche durch eine berührungsempfindliche Folie gebildet sein, welche mehrere berührungsempfindliche, insbesondere elektrisch leitfähige Elektroden enthält. Die Isolationsflächen können dann insbesondere unsymmetrisch zu einer sich von einem Zentrum einer Bodenoberfläche zu einer Manteloberfläche des Drehwählers erstreckenden Achse ausgebildet sein, insbesondere als Spitzen. Dies bietet weitere Möglichkeiten für die Übermittlung von Berührungssignalen, wobei eine Auswertungssoftware für diese Signale dann auch an die Ausgestaltung der inneren berührungsempfindlichen Fläche angepasst sein muss.

Die Signalerzeugung an den berührungsempfindlichen Flächen kann auf verschiedenen physikalischen Prinzipien basieren. Bevorzugt ist erfindungsgemäß ein Haushaltsgerät, bei dem die berührungsempfindlichen Flächen infolge einer Berührung von Deckeloberfläche und/oder Manteloberfläche, insbesondere bei Drehung des Drehwählers, eine Änderung einer elektrischen Kapazität zeigen.

Erfindungsgemäß ist überdies ein Haushaltsgerät bevorzugt, bei dem die Deckeloberfläche als Projektionsfläche ausgebildet ist und das Haushaltsgerät innerhalb des Gehäuses eine Projektionsvorrichtung enthält, die eingerichtet ist, um auf der Projektionsfläche Sichtinformation darzustellen.

Der Begriff "Sichtinformation" ist hierbei breit auszulegen, so dass Sichtinformation jegliche Information, insbesondere über das Haushaltsgerät und/oder ein in ihm ablaufendes Betriebsprogramm, ist, welche visuell dargestellt werden kann (im Folgenden auch als "Information" abgekürzt). Die Art der Information wird vom Haushaltsgerät abhängig sein und insbesondere auch davon, inwieweit ggf. andere vorhandene Komponenten der Bedienblende Informationen darstellen. Die Information umfasst beispielsweise Funktions- bzw. Bedieninformation wie Wasch-, Trocken- oder Kochprogramme, Temperaturangaben, Gebläsestufen, Kochstufen, Mulden -oder Herdfunktionen, sonstige Kochprogramm- und Sicherheitsinformation, die ein im Haushaltsgerät durchzuführendes Programm im weitesten Sinn betreffen. Hierzu ist die Steuereinheit des Haushaltsgerätes dann entsprechend eingerichtet.

Erfindungsgemäß ist die Steuereinheit dann im Allgemeinen eingerichtet, um auf dem Drehwähler, insbesondere seiner Projektionsfläche, Anzeigen zur Steuerung des Haushaltsgeräts darzustellen, um einem Benutzer die Bedienung des Haushaltsgeräts zu ermöglichen. So können bei dieser Ausführungsform beispielsweise Behandlungsprogramme, welche auf dem Haushaltsgerät durchgeführt werden können, auf der Projektionsfläche des Drehwählers angezeigt werden, sowie Behandlungsprogrammparameter, aber auch Betriebszustände.

Der Begriff "Betriebszustände" ist hierin breit auszulegen. So umfasst der Begriff "Betriebszustände" sowohl das Ergebnis eines initiierten Einschalt- oder Ausschaltvorganges und einen Stand-By-Modus des Haushaltsgeräts, als auch unterschiedliche Schritte eines durchgeführten Behandlungsprogramms. Als Sonderbetriebszustand gilt insbesondere ein Betriebszustand, welcher auf einer Fehlfunktion des Haushaltsgeräts beruht, beispielsweise ein Ausfall einer Laugenpumpe in einer Waschmaschine und/oder ein defektes Frischwasserzulaufventil. Ein Sonderbetriebszustand wird bei dieser speziellen Ausführungsform in Abhängigkeit von der Art eines Haushaltsgerätes festgelegt, beispielsweise kann es sich um einen nicht ordnungsgemäßen Betrieb des Haushaltsgerätes handeln, z.B. übermäßige Schaumerzeugung oder zu hohe Temperaturen.

Das erfindungsgemäße Haushaltsgerät weist bei dieser Ausführungsform eine Projektionsvorrichtung auf. Der Begriff "Projektionsvorrichtung" ist dabei breit auszulegen und umfasst alle Vorrichtungen, welche mittels elektromagnetischer Strahlung Sichtinformation auf der Projektionsfläche darstellen können. Davon erfasst sind insbesondere auch Projektionsvorrichtungen, welche keine optischen Mittel zur Darstellung der Abbildung benötigen wie insbesondere Laser-Projektoren. Im Allgemeinen wird mit der Projektionsvorrichtung eine Vorlage durch elektromagnetische Strahlung auf die Projektionsfläche geworfen bzw. abgebildet. Unter einer "Projektionsfläche" versteht man im Allgemeinen eine Fläche, oft eine Projektionsebene, auf die abgesehen vom Fall der Laserprojektion eine Vorlage durch Strahlen abgebildet bzw. geworfen wird. Die Projektionsfläche kann flach oder dreidimensional sein. Die Projektionsvorrichtung ist dabei vorzugsweise ein Videoprojektor, der hierin breit als ein Projektor definiert ist, der digitale Vorlagequellen benutzt.

Der Videoprojektor kann unter der hierin verwendeten Definition ein Laser-Projektor sein. Laser-Projektoren benutzen keine Vorlage. Stattdessen wird auf der Projektionsfläche ein Bild durch die Steuerung eines Laserstrahls erzeugt. Optische Mittel, insbesondere Objektive, werden dabei im Allgemeinen zur Strahlaufweitung verwendet, nicht aber zur optischen Abbildung.

Erfindungsgemäß bevorzugt erfolgt bei dieser Ausführungsform des erfindungsgemäßen Haushaltsgerätes die Darstellung von Sichtinformation, indem eine Lichtquelle optisch unter Verwendung eines Videoprojektors als Lichtquelle auf der Projektionsfläche abgebildet wird. Ein Videoprojektor ist im Allgemeinen ein Projektor, der stehende und bewegte Bilder aus einem visuellen Ausgabegerät, insbesondere einem Computer, und bei einer bevorzugten Ausführungsform aus der Steuereinheit und/oder einer Ansteuerungsvorrichtung, auf eine Projektionsfläche projiziert. Generell ist ein Haushaltsgerät bevorzugt, bei dem eine verwendete Projektionsvorrichtung zur Darstellung eines Bildes mindestens einen Flüssigkristallbildschirm aufweist. Beispielsweise kann ein projizierbarer Flüssigkristallbildschirm (LCD) im Strahlengang eines Durchlichtprojektors angeordnet sein. Das auf einem LCD sichtbare Bild wird dabei insbesondere durch elektrische Ansteuerung von im Allgemeinen vorhandenen Elektroden des LCDs erzeugt. So lassen sich mit LCDs von Computern erzeugte Grafiken und Bilder, aber auch Videobilder herstellen und projizieren. Bei Verwendung von Flüssigkristallbildschirmen ist es bevorzugt, dass eine optional verwendete Projektionsvorrichtung mehrere Flüssigkristallbildschirme für unterschiedliche Farben aufweist.

Sofern im erfindungsgemäßen Haushaltsgerät vorhanden, ist die Projektionsvorrichtung ausgebildet, die Sichtinformation und/oder Designelemente als Text, Symbole, Muster und/oder Bilder auf der Projektionsfläche darzustellen. Texte umfassen dabei Buchstaben, Zahlen und Sonderzeichen. Die Darstellung kann sowohl in Farben, in Graustufen und/oder in Schwarz/Weiß erfolgen, sowie überdies statisch oder animiert. Der Begriff "Animation" umfasst hierin alle Arten dynamischer Darstellungen, beispielsweise einfache Blinksequenzen, sich bewegende Muster, Bilder und/oder Texte, aber beispielsweise auch Videosequenzen.

In einer besonders bevorzugen Ausführungsform des Haushaltsgerätes ist bei Verwendung einer Projektionsvorrichtung im Haushaltsgerät eine elektronische Ansteuerungsvorrichtung für die Projektionsvorrichtung angeordnet, die gestattet, Informationen über das Haushaltsgerät und/oder ein darin ablaufendes Programm auf der dann ebenfalls vorhandenen Projektionsfläche im Drehwähler anzuzeigen.

Im Allgemeinen ist beim erfindungsgemäßen Haushaltsgerät in der Bedienblende benachbart zum Drehwähler ein Displaybereich angeordnet. Dabei ist ein Haushaltsgerät bevorzugt, bei dem der Displaybereich mehrere, durch mindestens eine auf der Rückseite der Bedieneinheit angeordnete Leuchtdiode, gemeinsam oder einzeln beleuchtbare, Displayteilbereiche umfasst. Den Displayteilbereichen sind dabei vorzugsweise im Haushaltsgerät durchführbare Betriebsprogramme zugeordnet.

Bevorzugt ist dabei ein Haushaltsgerät mit einer Steuereinheit, einer Frontblende mit einem mindestens teilweise lichtdurchlässigen Wählbereich zur Auswahl eines durchzuführenden Programmes und einem Displaybereich, in welchem mehrere beleuchtbare Displayteilbereiche bestimmten Programmen zugeordnet sind, sowie mit mindestens einem hinter der Frontblende angeordneten Leuchtmittel, wobei der Wählbereich einen Drehwähler und einen diesen umgebenden Grenzbereich zum Displaybereich aufweist und das Leuchtmittel bei einem Betrieb des Haushaltsgeräts gleichzeitig den Grenzbereich und andererseits einen Displayteilbereich beleuchten kann.

In einer bevorzugten Ausführungsform des Haushaltsgerätes ist der Drehwähler derart ausgestaltet, dass der Grenzbereich von einer Vorderseite der Frontblende als Spalt zwischen dem Drehwähler und dem Displaybereich wahrnehmbar ist. Vorzugsweise ist dabei im Spalt ein lichtdurchlässiges Material angeordnet, das von einem hinter der Frontblende angeordneten Leuchtmittel zumindest teilweise durchleuchtbar ist. Vorteilhaft ist der Spalt zumindest an der Stelle beleuchtet, die einem ausgewählten Displayteilbereich gegenüberliegt.

Der Drehwähler kann auf verschiedene Weise auf der Frontblende angeordnet sein, solange zumindest ein Teil der Manteloberfläche sich aus der Ebene der Frontblende erhebt, also vor der Außenoberfläche der Frontblende liegt, so dass ein Benutzer des Haushaltsgerätes mit insbesondere seinen Fingern die Manteloberfläche greifen und den Drehwähler somit drehen kann. Allerdings kann die Frontblende verschieden ausgebildet und somit insbesondere im Wesentlichen flach oder gebogen sein.

Es kann allerdings auch eine Versenkbarkeit des Drehwählers vorgesehen sein, so dass der Drehwähler beispielsweise derart versenkt werden kann, dass er sich erst durch ein Drücken auf einen Deckel des Drehwählers, d.h. die Deckeloberfläche, aus der versenkten Einstellung erhebt. Ebenso kann die Oberfläche des Drehwählers verschieden ausgestaltet sein. So können bestimmte haptische Gestaltungen die Bedienung des Drehwählers vereinfachen.

Erfindungsgemäß ist bei dieser Ausführungsform vorzugsweise mindestens ein Leuchtmittel, insbesondere eine Diode, hinter einem dem Drehwähler benachbarten Displaybereich angeordnet. Dabei kann die Beleuchtung durch die Leuchtdiode direkt oder über einen Lichtleiter vermittelt erfolgen.

Vorzugsweise sind beim Haushaltsgerät in der Steuereinheit dem Displaybereich Programme zugeordnet, die im Haushaltsgerät durchgeführt werden können, wobei einem im Displaybereich ausgewählten Displayteilbereich jeweils ein Programm zugeordnet ist, welches nach der Herstellung einer kommunizierenden Verbindung zwischen dem Drehwähler und dem ausgewählten Displayteilbereich durchgeführt wird. Es sei allerdings darauf hingewiesen, dass erfindungsgemäß die Durchführung eines Programmes ein Ergebnis der oben beschriebenen Übertragung eines Berührungssignals an die innere berührungsempfindlichen Fläche und dessen Auswertung durch eine Auswerteelektronik ist.

Wenn hierin von Beleuchtung durch ein Leuchtmittel die Rede ist, ist hiermit die direkte Beleuchtung mit einem Leuchtmittel sowie auch eine durch einen mit dem Leuchtmittel verbundenen Lichtleiter vermittelte Beleuchtung gemeint. Das Leuchtmittel ist erfindungsgemäß nicht eingeschränkt. Vorzugsweise werden eine oder mehrere Leuchtdioden eingesetzt. Es können sowohl anorganische Leuchtdioden als auch organische Leuchtdioden eingesetzt werden.

In Ausführungsformen des erfindungsgemäßen Haushaltsgerätes, bei denen dieses ein rotierendes Arbeitselement aufweist, z.B. eine Wäschetrommel in einer Waschmaschine oder einem Trockner, oder ein Mixelement in einem Rührgerät, ist bei dieser Ausführungsform eine Einstellung und Überwachung des rotierenden Arbeitselements möglich.

In einer bevorzugten Ausführungsform der Erfindung weist daher das Haushaltsgerät ein rotierendes Arbeitselement auf, dessen Drehbewegung durch Aufblinken von verschiedenen Leuchtdioden visualisiert wird, wobei eine Umdrehungsgeschwindigkeit des rotierenden Arbeitselementes, z.B. eine Wäschetrommel, proportional zu einer Blinkfrequenz der Leuchtdioden ist.

Beispielsweise können vorteilhaft Leuchtdioden in den Displayteilbereichen, d.h. die Displayleuchtdioden, umlaufend blinken, wobei die Umdrehungsgeschwindigkeit, mit welcher diese Leuchtdioden aufleuchten, proportional zu einer Rotationsgeschwindigkeit des Arbeitselementes ist. Allerdings kann erfindungsgemäß eine Drehbewegung insbesondere durch eine geeignete Projektion, z.B. eines sich rasch bewegenden Signals, auf der Projektionsfläche dargestellt werden.

Ein Haushaltsgerät im Sinne der Erfindung ist nicht beschränkt, aber vorzugsweise ein Haushaltsgerät zur Behandlung von Gegenständen. Ein solches Haushaltsgerät kann z.B. eine Waschmaschine, ein Trockner, ein Waschtrockner, eine Kaffeemaschine, aber auch eine Mikrowelle oder ein Herd sein. Zur Aufnahme und zur Behandlung der Gegenstände umfasst das Haushaltsgerät dann im Allgemeinen einen Behandlungsraum. Ist das Haushaltsgerät beispielsweise eine Waschmaschine, ein Trockner oder ein Waschtrockner, so kann der Behandlungsraum eine Trommel sein. Ist das Haushaltsgerät ein Herd, so kann der Behandlungsraum auch eine Ofenmuffel sein. Vorzugsweise ist das Haushaltsgerät ein wasserführendes Haushaltsgerät, ausgewählt aus der Gruppe bestehend aus Waschmaschine, Waschtrockner und Trockner.

Um bei Ausführungsformen des erfindungsgemäßen Haushaltsgerätes zu behandelnde Gegenstände aufnehmen zu können, weist der Behandlungsraum dann eine Öffnung auf, durch welche hindurch er mit Gegenständen bestückt werden kann. Eine Behandlung der Gegenstände erfolgt im Allgemeinen unter Einwirkung von bestimmten Prozessbedingungen, sei es trocken-warme Prozessluft in einem Trockner oder Hitze in einem Backofen oder Waschlauge in einer Waschmaschine. Es ist somit im Allgemeinen nötig, dass der Behandlungsraum während der Behandlung von Gegenständen verschlossen werden kann. Daher weist das erfindungsgemäße Haushaltsgerät bei dieser Ausführungsform im Allgemeinen eine Türeinheit zum Öffnen und Verschließen des Behandlungsraums auf. Die Ausgestaltung einer solchen Türeinheit ist nicht eingeschränkt, aber im Allgemeinen abhängig von der Art des Haushaltsgeräts und somit von der Art der Behandlung, welche im Behandlungsraum stattfindet.

Auf diese Weise kann eine Bedienung durch Drehen des Drehwählers und ggf. Berühren eines berührungsempfindlichen Oberflächenbereiches erfolgen, wobei dies in Ausführungsformen der Erfindung für einen Benutzer leicht erfolgen kann, da wesentliche Informationen auf die Projektionsfläche des Drehwählers projiziert werden und somit ortsfest sind, also Drehbewegungen des Drehwählers nicht mitmachen.

Gegenstand der Erfindung ist außerdem ein Verfahren zum Betrieb eines Haushaltsgerätes mit einem Gehäuse, einer Bedienblende, die auf einer Außenoberfläche einen um eine Drehachse drehbaren Drehwähler mit einer Deckeloberfläche, einer Manteloberfläche und einer Bodenoberfläche aufweist, und einer Steuereinheit, wobei der Drehwähler auf zumindest einem Teil seiner Manteloberfläche eine erste berührungsempfindliche Fläche aufweist und auf einem Teil der Bodenoberfläche eine zweite berührungsempfindliche Fläche aufweist, und wobei die zweite berührungsempfindliche Fläche einer inneren berührungsempfindlichen Fläche auf einer Innenoberfläche der Bedienblende derart gegenüberliegt, dass die zweite berührungsempfindliche Fläche und die innere berührungsempfindliche Fläche miteinander in Wechselwirkung treten können, wobei für eine Signalerzeugung an den berührungsempfindlichen Flächen die berührungsempfindlichen Flächen bei einer Berührung durch den Benutzer und/oder bei einer Drehung des Drehwählers eine Änderung der elektrischen Kapazität zeigen, wobei die Signale von der zweiten berührungsempfindlichen Fläche an die innere berührungsempfindliche Fläche weitergeleitet werden, wobei die Deckeloberfläche als Projektionsfläche ausgebildet ist und das Haushaltsgerät innerhalb des Gehäuses eine Projektionsvorrichtung enthält, die eingerichtet ist, um auf der Projektionsfläche Sichtinformation darzustellen, umfassend die Schritte
(a) Berühren und Drehen des Drehwählers, so dass eine an der ersten berührungsempfindlichen Fläche auftretende Änderung einer elektrischen Kapazität an die zweite berührungsempfindliche Fläche kommuniziert wird;
(b) Übertragung der Änderung der elektrischen Kapazität an die innere berührungsempfindliche Fläche; und
(c) Auswertung der Änderung der elektrischen Kapazität durch eine mit der inneren berührungsempfindlichen Fläche verbundene Auswerteelektronik in Hinblick auf eine absolute und/oder relative Änderung einer Position des Drehwählers.
   Bei einer bevorzugten Ausführungsform dieses Verfahren ist der Drehwähler semitransparent ausgestaltet und weist eine Projektionsfläche auf, insbesondere auf seiner Deckeloberfläche, und das Haushaltsgerät enthält innerhalb des Gehäuses eine Projektionsvorrichtung, die eingerichtet ist, um auf der Projektionsfläche Sichtinformation darzustellen, umfassend die Schritte:
(d) Umwandlung einer in digitaler Form vorliegenden Information über das Haushaltsgerät und/oder seinen Betriebszustand in Ansteuerungsinformation für die Projektionseinrichtung; und
(e) Darstellung der Sichtinformation auf der Projektionsfläche anhand der Ansteuerungsinformation.

Die in digitaler Form vorliegende Information über das Haushaltsgerät und/oder seinen Betriebszustand wird dabei im Allgemeinen von der Steuereinheit bereitgestellt. Die Ansteuerungsinformation wird dagegen im Allgemeinen von der Ansteuerungsvorrichtung bereitgestellt.

Die Erfindung hat zahlreiche Vorteile.

So ermöglicht die Erfindung die Verwendung einer standardisierten Elektronik, insbesondere einer standardisierten Bedienelektronik für eine Bedienung mittels berührungsempfindlicher Tasten (Touchtastenbedienung) sowie einer Bedienung mittels Drehwählern. Vorteilhaft ist zudem, dass keine mechanische Verbindung von Bedienelektronik und Drehwähler erforderlich ist, so dass insbesondere eine Unabhängigkeit von Toleranzen sowie eine erhöhte Flexibilität hinsichtlich des Bauraumes gegeben sind. Es gibt zudem im Innenbereich eines zu verwendenden Drehwählers prinzipiell mehr Platz für Bedien- und Anzeigeelemente. Schließlich kann auch die Dekoration von einzelnen Bauteilen des Drehwählers flexibler gestaltet werden.

In Ausführungsformen der Erfindung kann ein Benutzer auch aus der Entfernung sofort erkennen, ob eine Fehlfunktion am Gerät vorliegt und kann entsprechende Maßnahmen ergreifen. Auch in einem dunklen Aufstellraum, bei Lichtausfall oder bei Einbruch der Nacht ist gegebenenfalls eine gut erkennbare Darstellung von Inhalten von Vorteil.

Schließlich ermöglicht die Erfindung in Ausführungsformen eine modulare Anzeige, eine elektrische Entkopplung von Komponenten, die Anzeige auch von kleinen Symbolen sowie einen leichten Austausch von Designelementen und Projektionsmodulen zur Generierung von Varianten. Dabei ist in bevorzugten Ausführungsformen durch eine Projektion ein drehstabiles Bild der Projektion erhältlich, wobei ein Parallaxeneffekt der Anzeige vermieden werden kann und geringe Abstände der Symbole voneinander möglich sind.

Schließlich kann eine Standardschnittstelle für den Drehwähler unter Beibehaltung von Flexibilität beim Design geschaffen werden.

Weitere Einzelheiten der Erfindung ergeben sich aus der nachfolgenden Beschreibung nicht einschränkender Ausführungsformen. Hierbei wird Bezug genommen auf die Figuren 1 bis 6.
- Fig. 1: zeigt schematisch erfindungswesentliche Teile eines ansonsten nicht näher dargestellten erfindungsgemäßen Haushaltsgerätes gemäß einer ersten Ausführungsform, insbesondere erfindungswesentliche Teile einer Bedienblende der ersten Ausführungsform eines erfindungsgemäßen Haushaltsgerätes, wobei die Bauteile eines eingesetzten Drehwählers voneinander räumlich getrennt dargestellt sind.
- Fig. 2: zeigt eine Rückansicht eines Ausschnittes der Bedienblende von Fig. 1, in welcher insbesondere eine innere berührungsempfindliche Fläche gezeigt ist, zusammen mit einer Öffnung für einen ansonsten nicht näher gezeigten Drehwähler.
- Fig. 3: zeigt den in einer zweiten Ausführungsform des erfindungsgemäßen Haushaltsgerätes verwendeten Hohlzylinder als Bestandteil eines ansonsten nicht näher gezeigten Drehwählers eines erfindungsgemäßen Haushaltsgerätes.
- Fig. 4: zeigt den in einer dritten Ausführungsform des erfindungsgemäßen Haushaltsgerätes verwendeten Hohlzylinder als Bestandteil eines ansonsten nicht näher gezeigten Drehwählers eines erfindungsgemäßen Haushaltsgerätes.
- Fig. 5: zeigt schematisch Teile einer für eine weitere Ausführungsform eines ansonsten nicht näher dargestellten Haushaltsgerätes wichtigen Teile, wobei das Haushaltsgerät bei der hier gezeigten Darstellung eine Waschmaschine ist.
- Fig. 6: zeigt in einer Frontansicht einen Ausschnitt einer Bedienblende eines ansonsten nicht näher dargestellten Haushaltsgerätes mit einem Drehwähler, in dem bei dieser weiteren Ausführungsform auf einer mit der Deckeloberfläche des Drehwählers weitgehend übereinstimmenden Projektionsfläche Sichtinformation dargestellt werden kann.

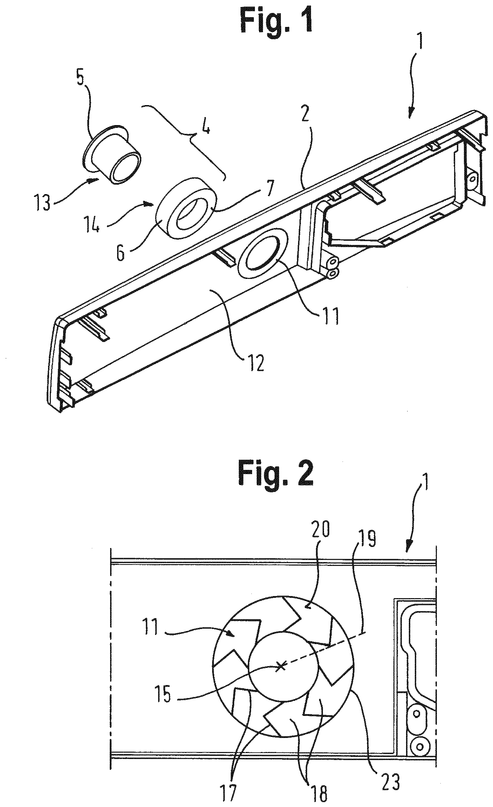

Fig. 1 zeigt schematisch erfindungswesentliche Teile eines ansonsten nicht näher dargestellten erfindungsgemäßen Haushaltsgerätes gemäß einer ersten Ausführungsform, insbesondere erfindungswesentliche Teile einer Bedienblende 1 des erfindungsgemäßen Haushaltsgerätes, wobei die Bauteile 13, 14 eines eingesetzten Drehwählers 4 voneinander räumlich getrennt dargestellt sind. Der Drehwähler 4 enthält hierbei als Bauteile ein Deckelteil 13 und einen Hohlzylinder 14. Das Deckelteil 13 weist eine Deckeloberfläche 5 auf. Der Hohlzylinder 14 weist eine elektrisch leitfähig ausgestaltete Manteloberfläche 6 auf sowie eine teilweise ebenfalls elektrisch leitfähig ausgestaltete Bodenoberfläche 7 auf. Der Drehwähler ist hier um eine nicht näher gezeigte Drehachse drehbar. Die Bedienblende 1 weist eine Außenoberfläche 2, welche einem Benutzer des ansonsten nicht gezeigten Haushaltsgerätes zugewandt ist, sowie eine Innenoberfläche 12 auf. Auf der Innenoberfläche 12 ist eine innere berührungsempfindliche elektrisch leitfähige Fläche 11 um eine Öffnung für den Drehwähler 4 angeordnet.

Fig. 2 zeigt eine Rückansicht eines Ausschnittes der Bedienblende 1 von Fig. 1, in welcher insbesondere eine innere berührungsempfindliche Fläche 20 gezeigt ist, zusammen mit einer Öffnung für einen hier nicht näher gezeigten Drehwähler. Die berührungsempfindliche Fläche 20 wird hier durch eine berührungsempfindliche Folie 23 gebildet, welche mehrere berührungsempfindliche, insbesondere elektrisch leitfähige Elektroden enthält. Die innere berührungsempfindliche Fläche besteht hier aus einer Anzahl von durch Isolationsflächen 17, hier als Spitzen ausgebildet, voneinander isolierten Unterflächen 18, wobei bei dieser Ausführungsform in der Mitte der Folie 23 eine Öffnung für den Durchlass des Drehwählers vorhanden ist. Die Isolationsflächen 17 sind bei der hier gezeigten ersten Ausführungsform unsymmetrisch zu einer sich vom Zentrum 15 der hier nicht gezeigten Bodenfläche bzw. der vorgenannten Öffnung zur ebenfalls nicht gezeigten Manteloberfläche des Drehwählers erstreckenden Achse 19 ausgebildet, insbesondere als Spitzen.

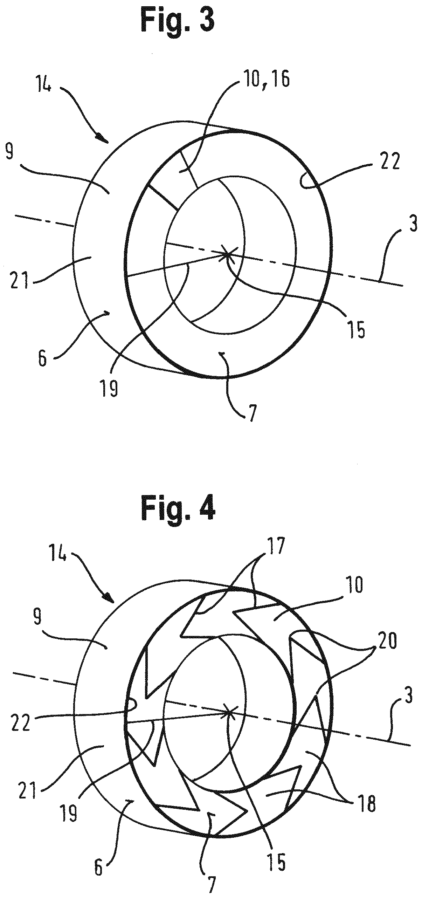

Fig. 3 zeigt einen in einer zweiten Ausführungsform des erfindungsgemäßen Haushaltsgerätes verwendeten Hohlzylinder 14 als Bestandteil eines ansonsten nicht näher gezeigten Drehwählers des Haushaltsgerätes. Der Hohlzylinder 14 ist um eine Drehachse 3 eines hier nicht weiter dargestellten drehbaren Drehwählers angeordnet. Der Hohlzylinder 14 bildet hier eine Manteloberfläche 6 und eine Bodenoberfläche 7 des Drehwählers. Bei der hier gezeigten Ausführungsform ist die gesamte Manteloberfläche 6 als eine erste berührungsempfindliche Fläche 9 ausgebildet. Ein Teil der Bodenoberfläche 7 weist eine zweite berührungsempfindliche Fläche 10 auf, die hier als eine sich von der Manteloberfläche 6 in Richtung des Zentrums 15 der Bodenoberfläche 7 erstreckende Abschnittsfläche 16 ausgebildet ist, welche in elektrisch leitendem Kontakt mit der ersten berührungsempfindlichen Fläche 9, d.h. hier der gesamten Manteloberfläche 6, steht.

22 bedeutend einen nichtleitenden Zylindermantel, insbesondere aus einem Kunststoff, welcher eine elektrisch leitfähige Beschichtung 21 aufweist.

Hier nicht näher ersichtlich liegt die zweite berührungsempfindliche Fläche 10 einer inneren berührungsempfindlichen Fläche auf einer Innenoberfläche der Bedienblende derart gegenüber, dass die zweite berührungsempfindliche Fläche 10 und die innere berührungsempfindliche Fläche 11 miteinander in elektromagnetische Wechselwirkung treten können.

Fig. 4 zeigt einen in einer dritten Ausführungsform des erfindungsgemäßen Haushaltsgerätes verwendeten Hohlzylinder 14 als Bestandteil eines ansonsten nicht näher gezeigten Drehwählers des Haushaltsgerätes. Der Hohlzylinder 14 ist um eine Drehachse 3 eines hier nicht weiter dargestellten drehbaren Drehwählers angeordnet. Der Hohlzylinder 14 bildet hier eine Manteloberfläche 6 und eine Bodenoberfläche 7 des Drehwählers. Bei der hier gezeigten Ausführungsform ist die gesamte Manteloberfläche 6 als eine erste berührungsempfindliche Fläche 9 ausgebildet. Ein Teil der Bodenoberfläche 7 weist eine zweite berührungsempfindliche Fläche 10 auf, die hier im Unterschied zu der in Fig. 3 gezeigten Ausführungsform aus einer Anzahl von auf der Bodenoberfläche 7 durch Isolationsflächen 17 voneinander isolierten leitfähigen Unterflächen 18 besteht, wobei die Unterflächen 18 jeweils in elektrisch leitendem Kontakt mit der ersten berührungsempfindlichen Fläche 9 stehen. Die Isolationsflächen 17 sind bei der hier gezeigten dritten Ausführungsform unsymmetrisch zu einer sich vom Zentrum 15 der hier nicht gezeigten Bodenfläche zur ebenfalls nicht gezeigten Manteloberfläche des Drehwählers erstreckenden Achse 19 ausgebildet, insbesondere als Spitzen 20. 22 bedeutend einen nichtleitenden Zylindermantel, insbesondere aus einem Kunststoff, welcher eine elektrisch leitfähige Beschichtung 21 aufweist.

Hier nicht näher ersichtlich liegt die zweite berührungsempfindliche Fläche 10 einer inneren berührungsempfindlichen Fläche auf einer Innenoberfläche der Bedienblende derart gegenüber, dass die zweite berührungsempfindliche Fläche 10 und die innere berührungsempfindliche Fläche 11 miteinander in elektromagnetische Wechselwirkung treten können.

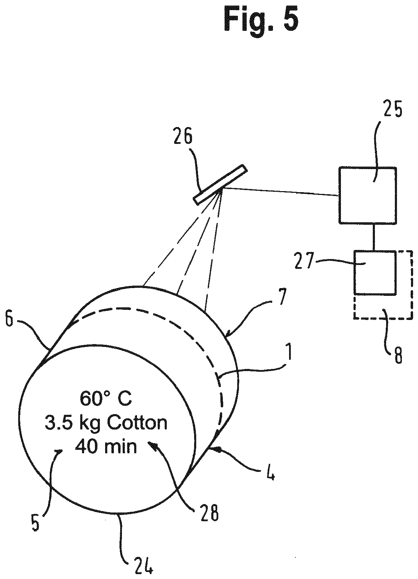

Fig. 5 zeigt schematisch Teile einer für eine Ausführungsform eines ansonsten nicht näher dargestellten Haushaltsgerätes wichtigen Teile, wobei das Haushaltsgerät bei der hier gezeigten Darstellung eine Waschmaschine ist. Auf einem Drehwähler 4 in einer ansonsten nur angedeuteten Bedienblende 1, welche hier den Drehwähler 4 so teilt, dass ein Teil des Drehwählers aus der Innenoberfläche der Bedienblende ragt, ist auf einer Projektionsfläche 24 Sichtinformation 28 projiziert. Bei einer Drehung des Drehwählers 4 ändert sich die Darstellung dieser Sichtinformation 28 nicht. Insbesondere wird diese projizierte Darstellung nicht mitgedreht. Die hier gezeigte Sichtinformation 28 entspricht einer Ausführungsform des Haushaltsgerätes als Waschmaschine.

Die Projektion der Sichtinformation 28 erfolgt durch eine Projektionsvorrichtung 25, welche hier einen Spiegel 26 zur Projektion des erzeugten Bildes aufweist, ansonsten aber nicht näher dargestellt ist. Die Projektionsvorrichtung 25 ist insbesondere ein Videoprojektor.

Die Projektionsfläche 24 stimmt bei der hier gezeigten Ausführungsform mit einer berührungsempfindlich ausgestalteten Deckeloberfläche 5 des Drehwählers 4 überein, bei deren Berührung Kapazitätsänderungen an hier nicht gezeigten berührungsempfindlichen Elektroden erzeugt werden, so dass beispielsweise ein Schaltvorgang, z.B. ein Aus/EinSchaltvorgang, ausgelöst werden kann.

Die Projektionsvorrichtung 25 ist mit einer Ansteuerungsvorrichtung 27 verbunden, die separat oder als Teil einer Steuereinheit 8 des Haushaltsgerätes vorhanden sein kann.

6 bedeutet eine Manteloberfläche, die mit einer berührungsempfindlichen Schicht beschichtet ist. 7 bedeutet eine hier ansonsten nicht näher gezeigte Bodenoberfläche des Drehwählers, die hinter der angedeuteten Bedienblende 1 angeordnet ist.

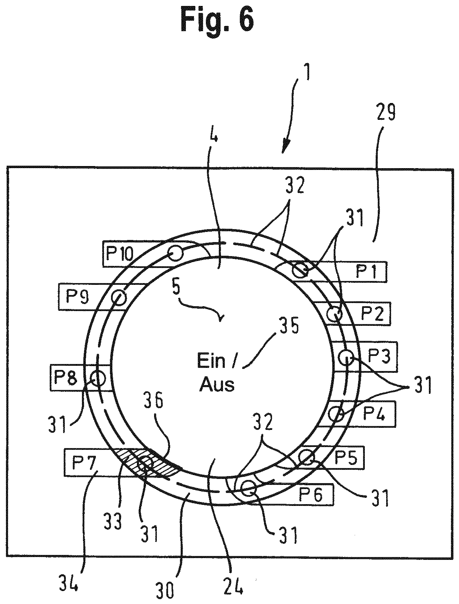

Fig. 6 zeigt in einer Frontansicht einen Ausschnitt einer Bedienblende 1 eines ansonsten nicht näher dargestellten Haushaltsgerätes mit einem Drehwähler 4, in dem bei dieser Ausführungsform auf einer mit der Deckeloberfläche 5 des Drehwählers 4 weitgehend übereinstimmenden Projektionsfläche 24 Sichtinformation dargestellt werden kann. Im Haushaltsgerät können verschiedene Programme durchgeführt werden, die in Fig. 6 mit den Bezeichnungen P1 bis P10 versehen sind. Beim Haushaltsgerät kann es sich beispielsweise um eine Waschmaschine handeln, in welcher verschiedene Programme zur Behandlung von Wäsche durchgeführt werden können. Andere Haushaltsgeräte (Trockner, Geschirrspülmaschine, Mixer, Backöfen, Herde, Kaffeemaschinen) sind möglich.

In der Bedienblende 1 ist bei der hier gezeigten Ausführungsform ein Drehwähler 4, wie er in den obigen Figuren näher beschrieben ist, zur Auswahl eines durchzuführenden Programmes und ein Displaybereich 29 mit mehreren Displayteilbereichen, z.B. Displayteilbereich P7 34, vorhanden, die bestimmten Programmen, hier mit P1 bis P10 bezeichnet, zugeordnet sind. Hinter der Bedienblende 1 ist in einem Grenzring 30 ein hier gestrichelt angedeuteter Lichtleiterring 32 aus Polycarbonat mit hier nicht weiter angedeuteten Lichtaustrittsstellen angeordnet, hinter denen sich Leuchtdioden 31 befinden, die hierin auch als Grenzringleuchtdioden bezeichnet werden.

Der Drehwähler 4 weist eine Projektionsfläche 24 auf, auf welche durch eine hier nicht sichtbare Projektionsvorrichtung hier nicht im Detail gezeigte Sichtinformation, d.h. ruhende oder sich bewegende Bilder mit Daten, Symbolen und Buchstaben, projiziert werden kann. Bei der hier gezeigten Ausführungsform ist die Projektionsfläche 24 überdies berührungsempfindlich ausgestaltet. Insbesondere sind hier nicht gezeigte transparente Elektroden angeordnet, die bei einer Berührung oder Annäherung mit einem länglichen Gegenstand, insbesondere auch mit einem Finger, eine Änderung der elektrischen Kapazität bewirken und so einen Vorgang im Haushaltsgerät steuern können. Bei der hier gezeigten Ausführungsform ist die gesamte Projektionsfläche 24 als berührungsempfindliche Fläche 35 ausgestaltet, wobei durch eine Berührung der Fläche 35 das Haushaltsgerät ein- oder ausgeschaltet werden kann.

Der Drehwähler 4 ist von einem lichtdurchlässigen Grenzring 30 umgeben, welcher den Drehwähler 4 vom Displaybereich 29 trennt, wobei der lichtdurchlässige Grenzring 30 einen Lichtleiterring 32 enthält, in den Licht aus hier insgesamt zehn Leuchtdioden 31 eingeleitet werden kann. Der Drehwähler 4 ermöglicht durch seine Drehung über eine hier nicht gezeigte Abschnittsfläche, welche die Drehung durch elektromagnetische Wechselwirkung auf eine hier ebenfalls nicht gezeigte, hinter der Bedienblende 1 befindliche innere berührungsempfindliche Fläche der Bedienblende weitergibt, eine Auswahl eines Displayteilbereiches, z.B. von Displayteilbereich 34. Der Grenzring 30 leuchtet an einer Stelle 33, die einem ausgewählten Displayteilbereich 34 gegenüberliegt, mit einem Maximum der Lichtintensität. Der Lichtleiterring 32 weist zehn hier nicht näher erkennbare Lichtauskopplungsstellen auf, die den Displayteilbereichen zugeordnet sind. Hinter den Lichtauskopplungsstellen befindet sich jeweils eine Leuchtdiode 31.

Bei der Benutzung des Drehwählers 4 im Haushaltsgerät wird ein Programm durchgeführt, welches in der Steuereinheit des Haushaltsgerätes dem Displaybereich 29 zugeordnet ist. Hierzu ist insbesondere einem im Displaybereich 29 ausgewählten Displayteilbereich jeweils ein Programm P1 bis P10 zugeordnet, welches nach der Herstellung einer elektrisch leitenden Verbindung 36 zwischen dem Drehwähler 4 und dem ausgewählten Displayteilbereich 34, ggf. erst nach einer erneuten Bestätigung durch einen Benutzer des Haushaltsgerätes, angezeigt und aufgrund der Weiterleitung und Auswertung eines Berührungssignals am Drehwähler durchgeführt wird. Hierbei wird die Durchführung des Programms insbesondere durch die Weitergabe der Änderung einer elektrischen Kapazität an die hier nicht gezeigte innere berührungsempfindliche Fläche eingeleitet, die wiederum mit einer hier nicht gezeigten Auswerteelektronik und der Steuereinheit des Haushaltsgerätes verbunden ist.

Vorliegend würde das Programm P7 durchgeführt werden. Durch die bei dieser Ausführungsform vorhandene elektrische Verbindung 36 wird bewirkt, dass die dahinter angeordnete Grenzringdiode 31 eingeschaltet wird. Dadurch leuchtet der Grenzring 30 an einer dem ausgewählten Displayteilbereich 34 gegenüberliegenden Stelle.

Bei der in der Fig. 6 auszugsweise gezeigten Bedienblende 1 kann eine Drehbewegung eines im Haushaltsgerät rotierenden Arbeitselementes, insbesondere einer Wäschetrommel, visualisiert werden. Beispielsweise können hierzu die Displayleuchtdioden 31 nach einem geeigneten Zeitprogramm alternierend blinken.

### Bezugszeichenliste

- 1: Bedienblende
- 2: Außenoberfläche der Bedieneinheit
- 3: Drehachse
- 4: Drehwähler
- 5: Deckeloberfläche
- 6: Manteloberfläche
- 7: Bodenoberfläche
- 8: Steuereinheit
- 9: Erste berührungsempfindliche Fläche (auf der Manteloberfläche)
- 10: Zweite berührungsempfindliche Fläche (auf der Bodenoberfläche)
- 11: Innere berührungsempfindliche Fläche
- 12: Innenoberfläche der Bedienblende
- 13: Deckelteil
- 14: Hohlzylinder
- 15: Mittelpunkt (Zentrum) der Bodenoberfläche
- 16: Abschnittsfläche
- 17: Isolationsflächen
- 18: Leitfähige Unterflächen
- 19: Achse, vom Mittelpunkt der Bodenoberfläche zur Manteloberfläche
- 20: Isolationsfläche in Form einer Spitze
- 21: Elektrisch leitfähige Beschichtung
- 22: Nichtleitender Zylindermantel
- 23: Berührungsempfindliche Folie
- 24: Projektionsfläche
- 25: Projektionsvorrichtung
- 26: Spiegel
- 27: Ansteuerungsvorrichtung
- 28: Sichtinformation
- 29: Displaybereich
- 30: Lichtdurchlässiger Grenzring
- 31: Leuchtdioden im lichtdurchlässigen Grenzring; Grenzringleuchtdioden
- 32: Lichtleiterring
- 33: Beleuchtete Stelle im Grenzring (gegenüber einem ausgewählten Displayteilbereich)
- 34: Ausgewählter Displayteilbereich
- 35: Berührungsempfindlicher Oberflächenbereich; Ein/Aus-Schalter
- 36: Elektrisch leitende Verbindung zwischen Drehwähler und ausgewähltem Displayteilbereich

## Patentansprüche

1. Haushaltsgerät mit einem Gehäuse, einer Bedienblende (1), die auf einer Außenoberfläche (2) einen um eine Drehachse (3) drehbaren Drehwähler (4) mit einer Deckeloberfläche (5), einer Manteloberfläche (6) und einer Bodenoberfläche (7) aufweist, und einer Steuereinheit (8), wobei der Drehwähler (4) auf zumindest einem Teil seiner Manteloberfläche (6) eine erste berührungsempfindliche Fläche (9) aufweist und auf einem Teil der Bodenoberfläche (7) eine zweite berührungsempfindliche Fläche (10) aufweist, wobei die zweite berührungsempfindliche Fläche (10) einer inneren berührungsempfindlichen Fläche (11) auf einer Innenoberfläche (12) der Bedienblende (1) derart gegenüberliegt, dass die zweite berührungsempfindliche Fläche (10) und die innere berührungsempfindliche Fläche (11) miteinander in Wechselwirkung treten können, wobei für eine Signalerzeugung an den berührungsempfindlichen Flächen (9, 10, 11) die berührungsempfindlichen Flächen (9,10,11) bei einer Berührung durch einen Benutzer und/oder bei einer Drehung des Drehwählers (4) eine Änderung einer elektrischen Kapazität zeigen, wobei die Signale von der zweiten berührungsempfindlichen Fläche (10) an die innere berührungsempfindliche Fläche (11) weitergeleitet werden, wobei eine mit der inneren berührungsempfindlichen Fläche (11) verbundene Auswerteelektronik zur Auswertung der Änderung der elektrischen Kapazität in Hinblick auf eine absolute und/oder relative Änderung einer Position des Drehwählers (4) vorgesehen ist, wobei eine an der ersten berührungsempfindlichen Fläche (9) auftretende Änderung einer elektrischen Kapazität an die zweite berührungsempfindliche Fläche (10) kommuniziert werden kann, wobei die Deckeloberfläche (5) als Projektionsfläche (24) ausgebildet ist und das Haushaltsgerät innerhalb des Gehäuses eine Projektionsvorrichtung (25,26) enthält, die eingerichtet ist, um auf der Projektionsfläche (24) Sichtinformation (28) darzustellen.

2. Haushaltsgerät nach Anspruch 1, **dadurch gekennzeichnet, dass** der Drehwähler (4) ein Deckelteil (13) mit der Deckeloberfläche (5) und einen Hohlzylinder (14) mit der Manteloberfläche (6) beinhaltet.

3. Haushaltsgerät nach Anspruch 2, **dadurch gekennzeichnet, dass** der Drehwähler (4) einstückig derart ausgestaltet ist, dass Deckelteil (13) und Hohlzylinder (14) ein einziges Bauteil bilden.

4. Haushaltsgerät nach Anspruch 2, **dadurch gekennzeichnet, dass** Deckelteil (13) und Hohlzylinder (14) zwei getrennte Bauteile sind.

5. Haushaltsgerät nach einem der Ansprüche 1 bis 4, **dadurch gekennzeichnet, dass** die Deckeloberfläche (5) zumindest teilweise berührungsempfindlich ausgestaltet ist.

6. Haushaltsgerät nach einem der Ansprüche 1 bis 5, **dadurch gekennzeichnet, dass** die zweite berührungsempfindliche Fläche (10) als eine sich von der Manteloberfläche (6) in Richtung des Zentrums (15) der Bodenoberfläche (7) erstreckende Abschnittsfläche (16) ausgebildet ist, welche in elektrisch leitendem Kontakt mit der ersten berührungsempfindlichen Fläche (9) steht.

7. Haushaltsgerät nach einem der Ansprüche 1 bis 5, **dadurch gekennzeichnet, dass** die zweite berührungsempfindliche Fläche (10) eine Anzahl von auf der Bodenoberfläche (7) durch Isolationsflächen (17) voneinander isolierten Unterflächen (18) enthält oder aus diesen besteht.

8. Haushaltsgerät nach Anspruch 7, **dadurch gekennzeichnet, dass** die Isolationsflächen (17) unsymmetrisch zu einer sich vom Zentrum (15) der Bodenfläche (7) zur Manteloberfläche (6) erstreckenden Achse (19) ausgebildet sind.

9. Haushaltsgerät nach Anspruch 8, **dadurch gekennzeichnet, dass** die Isolationsflächen (17) als Spitzen (20) ausgebildet sind.

10. Haushaltsgerät nach einem der Ansprüche 1 bis 9, **dadurch gekennzeichnet, dass** die erste berührungsempfindliche Fläche (9) aus einer leitfähigen Beschichtung (21) eines nichtleitenden Zylindermantels (22) besteht.

11. Haushaltsgerät nach einem der Ansprüche 1 bis 10, **dadurch gekennzeichnet, dass** die innere berührungsempfindliche Fläche (11) durch eine berührungsempfindliche Folie (23) gebildet wird, welche mindestens eine berührungsempfindliche Elektrode enthält.

12. Haushaltsgerät nach einem der vorhergehenden Ansprüche, **dadurch gekennzeichnet, dass** in der Bedienblende (1) benachbart zum Drehwähler (4) ein Displaybereich (29) angeordnet ist.

13. Verfahren zum Betrieb eines Haushaltsgerätes mit einem Gehäuse, einer Bedienblende (1), die auf einer Außenoberfläche (2) einen um eine Drehachse (3) drehbaren Drehwähler (4) mit einer Deckeloberfläche (5), einer Manteloberfläche (6) und einer Bodenoberfläche (7) aufweist, und einer Steuereinheit (8), wobei der Drehwähler (4) auf zumindest einem Teil seiner Manteloberfläche (6) eine erste berührungsempfindliche Fläche (9) aufweist und auf einem Teil der Bodenoberfläche (7) eine zweite berührungsempfindliche Fläche (10) aufweist, und wobei die zweite berührungsempfindliche Fläche (10) einer inneren berührungsempfindlichen Fläche (11) auf einer Innenoberfläche (12) der Bedienblende (1) derart gegenüberliegt, dass die zweite berührungsempfindliche Fläche (10) und die innere berührungsempfindliche Fläche (11) miteinander in Wechselwirkung treten können, wobei für eine Signalerzeugung an den berührungsempfindlichen Flächen (9, 10, 11) die berührungsempfindlichen Flächen (9,10,11) bei einer Berührung durch einen Benutzer und/oder bei einer Drehung des Drehwählers (4) eine Änderung einer elektrischen Kapazität zeigen, wobei die Signale von der zweiten berührungsempfindlichen Fläche (10) an die innere berührungsempfindliche Fläche (11) weitergeleitet werden, wobei die Deckeloberfläche (5) als Projektionsfläche (24) ausgebildet ist und das Haushaltsgerät innerhalb des Gehäuses eine Projektionsvorrichtung (25,26) enthält, die eingerichtet ist, um auf der Projektionsfläche (24) Sichtinformation (28) darzustellen, umfassend die Schritte
(a) Berühren und Drehen des Drehwählers (4), so dass eine an der ersten berührungsempfindlichen Fläche (9) auftretende Änderung einer elektrischen Kapazität an die zweite berührungsempfindliche Fläche (10) kommuniziert wird;
(b) Übertragung der Änderung der elektrischen Kapazität an die innere berührungsempfindliche Fläche (11); und
(c) Auswertung der Änderung der elektrischen Kapazität durch eine mit der inneren berührungsempfindlichen Fläche (11) verbundene Auswerteelektronik in Hinblick auf eine absolute und/oder relative Änderung einer Position des Drehwählers (4).

## Claims

1. Household appliance with a housing, a control panel (1), which, on an outer surface (2), has a rotary selector (4), which can be rotated about an axis of rotation (3), with a cover surface (5), a casing surface (6) and a base surface (7), and a control unit (8), wherein the rotary selector (4) has a first touch-sensitive surface (9) on at least one part of its casing surface (6) and a second touch-sensitive surface (10) on a part of the base surface (7), wherein the second touch-sensitive surface (10) faces an inner touch-sensitive surface (11) on an inner surface (12) of the control panel (1) in such a way that the second touch-sensitive surface (10) and the inner touch-sensitive surface (11) can interact with one another, wherein in order to generate a signal on the touch-sensitive surfaces (9, 10, 11), the touch-sensitive surfaces (9, 10, 11) indicate a change in an electrical capacitance when touched by a user and/or when the rotary selector (4) is rotated, wherein the signals are routed from the second touch-sensitive surface (10) to the inner touch-sensitive surface (11), wherein an electronic evaluation system connected to the inner touch-sensitive surface (11) is provided to evaluate the change in the electrical capacitance in respect of an absolute and/or relative change in a position of the rotary selector (4), wherein a change in an electrical capacitance occurring on the first touch-sensitive surface (9) can be communicated to the second touch-sensitive surface (10), wherein the cover surface (5) is embodied as a projection surface (24) and the household appliance within the housing contains a projection device (25, 26) which is designed to display visual information (28) on the projection surface (24).

2. Household appliance according to claim 1, **characterised in that** the rotary selector (4) contains a cover part (13) with the cover surface (5) and a hollow cylinder (14) with the casing surface (6).

3. Household appliance according to claim 2, **characterised in that** the rotary selector (4) is embodied in one piece so that the cover part (13) and hollow cylinder (14) form a single component.

4. Household appliance according to claim 2, **characterised in that** the cover part (13) and the hollow cylinder (14) are two separate components.

5. Household appliance according to one of claims 1 to 4, **characterised in that** the cover surface (5) is embodied to be at least partially touch-sensitive.

6. Household appliance according to one of claims 1 to 5, **characterised in that** the second touch-sensitive surface (10) is embodied as a sectional surface (16) which extends from the casing surface (6) in the direction of the centre (15) of the base surface (7) and which is in electrically conducting contact with the first touch-sensitive surface (9).

7. Household appliance according to one of claims 1 to 5, **characterised in that** the second touch-sensitive surface (10) contains or consists of a number of lower surfaces (18) which are insulated from one another on the base surface (7) by means of insulation surfaces (17).

8. Household appliance according to claim 7, **characterised in that** the insulation surfaces (17) are embodied in a non-symmetrical manner relative to an axis (19) which extends from the centre (15) of the base surface (7) to the casing surface (6).

9. Household appliance according to claim 8, **characterised in that** the insulation surfaces (17) are embodied as peaks (20).

10. Household appliance according to one of claims 1 to 9, **characterised in that** the first touch-sensitive surface (9) consists of a conductive coating (21) of a non-conducting cylinder casing (22).

11. Household appliance according to one of claims 1 to 10, **characterised in that** the inner touch-sensitive surface (11) is formed by a touch-sensitive film (23), which contains at least one touch-sensitive electrode.

12. Household appliance according to one of the preceding claims, **characterised in that** a display region (29) is arranged in the control panel (1) adjacent to the rotary selector (4).

13. Method for operating a household appliance with a housing, a control panel (1) which has a rotary selector (4), with a cover surface (5) a casing surface (6) and a base surface (7), which can be rotated about a rotary axis (3) on an outer surface (2), and a control unit (8), wherein the rotary selector (4) has a first touch-sensitive surface (9) on at least one part of its casing surface (6) and a second touch-sensitive surface (10) on a part of the base surface (7), and wherein the second touch-sensitive surface (10) faces an inner touch-sensitive surface (11) on an inner surface (12) of the control panel (1) so that the second touch-sensitive surface (10) and the inner touch-sensitive surface (11) can interact with one another, wherein in order to generate a signal on the touch-sensitive surfaces (9, 10, 11), the touch-sensitive surfaces (9, 10, 11) indicate a change in an electric capacitance when touched by a user and/or when the rotary selector (4) is rotated, wherein the signals are routed from the second touch-sensitive surface (10) to the inner touch-sensitive surface (11), wherein the cover surface (5) is embodied as a projection surface (24) and the household appliance contains a projection device (25, 26) within the housing, which is designed to show visual information (28) on the projection surface (24). comprising the steps
(a) touching and rotating the rotary selector (4) so that a change in an electrical capacitance occurring on the first touch-sensitive surface (9) is communicated to the second touch-sensitive surface (10),
(b) transmitting the change in the electrical capacitance to the inner touch-sensitive surface (11); and
(c) evaluating the change in the electrical capacitance by means of an electronic evaluation system connected to the inner touch-sensitive surface (11) in respect of an absolute and/or relative change in a position of the rotary selector (4).

## Revendications

1. Appareil ménager avec une carcasse, un bandeau de commande (1), qui présente sur une surface extérieure (2) un sélecteur rotatif (4) rotatif autour d'un axe de rotation (3) avec une surface de couvercle (5), une surface de manteau (6) et une surface de fond (7), et une unité de commande (8), dans lequel le sélecteur rotatif (4) présente sur au moins une partie de sa surface de manteau (6) une première surface tactile (9) et sur une partie de la surface de fond (7) une deuxième surface tactile (10), dans lequel la deuxième surface tactile (10) s'oppose à une surface tactile intérieure (11) sur une surface intérieure (12) du bandeau de commande (1) de telle sorte que la deuxième surface tactile (10) et la surface tactile intérieure (11) peuvent entrer en interaction, dans lequel pour une génération de signal sur les surfaces tactiles (9, 10, 11), les surfaces tactiles (9, 10, 11) présentent en présence d'un contact par un utilisateur et/ou en présence d'une rotation du sélecteur rotatif (4) une modification d'une capacité électrique, dans lequel les signaux de la deuxième surface tactile (10) sont transmis à la surface tactile intérieure (11), dans lequel une électronique d'exploitation reliée à la surface tactile intérieure (11) est prévue pour l'évaluation de la modification de la capacité électrique par rapport à une modification absolue et/ou relative d'une position du sélecteur rotatif (4), dans lequel une modification d'une capacité électrique survenant au niveau de la première surface tactile (9) peut être communiquée à la deuxième surface tactile (10), dans lequel la surface de couvercle (5) est formée sous la forme d'une surface de projection (24) et l'appareil ménager contient à l'intérieur de la carcasse un dispositif de projection (25, 26) aménagé afin de présenter des informations visuelles (28) sur la surface de projection (24).

2. Appareil ménager selon la revendication 1, **caractérisé en ce que** le sélecteur rotatif (4) contient une partie de couvercle (13) avec la surface de couvercle (5) et un cylindre creux (14) avec la surface de manteau (6).

3. Appareil ménager selon la revendication 2, **caractérisé en ce que** le sélecteur rotatif (4) est aménagé en une seule pièce de sorte que la partie de couvercle (13) et le cylindre creux (14) constituent un seul composant.

4. Appareil ménager selon la revendication 2, **caractérisé en ce que** la partie de couvercle (13) et le cylindre creux (14) sont deux composants séparés.

5. Appareil ménager selon l'une des revendications 1 à 4, **caractérisé en ce que** la surface de couvercle (5) est au moins partiellement aménagée sous forme tactile.

6. Appareil ménager selon l'une des revendications 1 à 5, **caractérisé en ce que** la deuxième surface tactile (10) est formée sous la forme d'une surface de section (16) s'étendant de la surface de manteau (6) en direction du centre (15) de la surface de fond (7) et en contact électroconducteur avec la première surface tactile (9).

7. Appareil ménager selon l'une des revendications 1 à 5, **caractérisé en ce que** la deuxième surface tactile (10) contient un nombre de surfaces inférieures (18) isolées l'une de l'autre sur la surface de fond (7) par des surfaces d'isolation (17) ou se compose de celles-ci.

8. Appareil ménager selon la revendication 7, **caractérisé en ce que** les surfaces d'isolation (17) sont formées de façon asymétrique par rapport à un axe (19) s'étendant du centre (15) de la surface de fond (7) vers la surface de manteau (6).

9. Appareil ménager selon la revendication 8, **caractérisé en ce que** les surfaces d'isolation (17) sont formées sous forme de pointes (20).

10. Appareil ménager selon l'une des revendications 1 à 9, **caractérisé en ce que** la première surface tactile (9) consiste en un revêtement conducteur (21) d'un matériau de cylindre non conducteur (22).

11. Appareil ménager selon l'une des revendications 1 à 10, **caractérisé en ce que** la surface tactile intérieure (11) est formée par un film tactile (23) contenant au moins une électrode tactile.

12. Appareil ménager selon l'une des revendications précédentes, **caractérisé en ce qu'**une zone d'affichage (29) est disposée dans le voisinage du sélecteur rotatif (4) dans le bandeau de commande (1).

13. Procédé d'exploitation d'un appareil ménager avec une carcasse, un bandeau de commande (1), qui présente sur une surface extérieure (2) un sélecteur rotatif (4) rotatif autour d'un axe de rotation (3) avec une surface de couvercle (5), une surface de manteau (6) et une surface de fond (7), et une unité de commande (8), dans lequel le sélecteur rotatif (4) présente sur au moins une partie de sa surface de manteau (6) une première surface tactile (9) et sur une partie de la surface de fond (7) une deuxième surface tactile (10), et dans lequel la deuxième surface tactile (10) s'oppose à une surface tactile intérieure (11) sur une surface intérieure (12) du bandeau de commande (1) de telle sorte que la deuxième surface tactile (10) et la surface tactile intérieure (11) peuvent entrer en interaction, dans lequel pour une génération de signal sur les surfaces tactiles (9, 10, 11), les surfaces tactiles (9, 10, 11) présentent en présence d'un contact par un utilisateur et/ou en présence d'une rotation du sélecteur rotatif (4) une modification d'une capacité électrique, dans lequel les signaux de la deuxième surface tactile (10) sont transmis à la surface tactile intérieure (11), dans lequel la surface de couvercle (5) est formée sous la forme d'une surface de projection (24) et l'appareil ménager contient à l'intérieur de la carcasse un dispositif de projection (25, 26) aménagé afin de présenter des informations visuelles (28) sur la surface de projection (24), comprenant les étapes
(a) effleurement et rotation du sélecteur rotatif (4), de sorte qu'une modification d'une capacité électrique survenant au niveau de la première surface tactile (9) soit communiquée à la deuxième surface tactile (10) ;
(b) transmission de la modification de la capacité électrique à la surface tactile intérieure (11) ; et
(c) évaluation de la modification de la capacité électrique par une électronique d'exploitation reliée à la surface tactile intérieure (11) par rapport à une modification absolue et/ou relative d'une position du sélecteur rotatif (4).
